# EUROPÄISCHE PATENTSCHRIFT

(11) **EP 1 666 863 B1**
(45) Veröffentlichungstag und Bekanntmachung des Hinweises auf die Patenterteilung: **18.11.2009**
(21) Anmeldenummer: 05026197.3
(22) Anmeldetag: 01.12.2005
(51) Int. Cl.: G01M 3/10, G01M 3/22

(54) **Verfahren zur Prüfung der Dichtigkeit von Behältern**
Procedure for testing the fluid tightness of containers
Procédé d'essai de l'étanchéité de récipients

(30) Priorität: 03.12.2004 DE 102004058606
(43) Veröffentlichungstag der Anmeldung: 07.06.2006
(73) Patentinhaber: EADS Deutschland GmbH, 85521 Ottobrunn (DE)
(72) Erfinder: Voglsinger, Martin, 85617 Asslingen (DE)

(56) Entgegenhaltungen:
- WO-A1-01/44775
- DE-U1- 8 436 583
- GB-A- 2 337 114
- US-A- 5 425 279
- US-A- 5 979 239
- US-A1- 2004 007 050

## Beschreibung

### TECHNISCHES GEBIET

Die Erfindung betrifft ein Verfahren zur Prüfung der Dichtigkeit von Behältern. Sie betrifft zudem ein Verfahren zur Abdichtung von Behältern nach erfolgter Prüfung der Dichtigkeit sowie eine Vorrichtung zur Abdichtung von Behältern.

### STAND DER TECHNIK

Die Undichtigkeit von Kraftstofftanks und sonstigen Tanks an Flugzeugen ist ein Problem mit weitreichenden Auswirkungen auf die Flugsicherheit und die Betriebssicherheit am Boden. Auch der Arbeitsschutz und der Umweltschutz sind davon betroffen. Sind oder werden Kraftstofftanks von Flugzeugen undicht, so entstehen hohe Reparaturkosten und die Einsatzbereitschaft einer Flugzeugflotte ist beeinträchtigt. Bei Übergabe eines neuen oder eines überholten Flugzeugs an einen Kunden werden alle Systeme abschließend geprüft, auch die Dichtigkeit der Tankanlage. Beim Betrieb eines Flugzeugs sowohl am Boden als auch im Flugbetrieb können innerhalb eines Flugzeug-Lebenszyklus' von zumeist mehr als 25 Jahren Undichtigkeiten von Flugzeugtanks auftreten. Diese Undichtigkeiten können ihre Ursache in einer mechanischen Beschädigung der Tankwandung aufgrund unsachgemäßer Handhabung des Flugzeugs oder aufgrund ungeplanter Belastungen aus dem Flugbetrieb wie zum Beispiel Überlasten oder Schwingungen, haben. Insbesondere bei Militärflugzeugen können derartige Undichtigkeiten auch durch Beschuss des Flugzeugs auftreten.

Das Interesse des Betreibers des Flugzeugs ist es, mit nur geringem Aufwand an Zeit und Personal die Flugfähigkeit des Flugzeugs wiederherzustellen, ohne dass hierfür das Flugzeug in eine Flugzeugwerft des Herstellers verbracht werden muss. Insbesondere bei Integraltanks, das heißt bei Tanks, die sich in ihrer räumlichen Gestalt an die Außenkontur des Flugzeugs und/oder an eine durch Flugzeugeinbauten bestimmte Innenkontur des Flugzeugs anpassen, weist die Tankwandung eine Vielzahl von Fügestellen auf, an denen potentiell Undichtigkeiten entstehen können, obwohl der technische Stand der Dichtungstechnologie auch für derartige Integraltanks sowohl bezüglich der Fertigung als auch bezüglich der Qualitätsprüfung sehr hoch ist.

Trotz all dieser Maßnahmen können im Laufe des Betriebs eines Flugzeugs Undichtigkeiten in der Tankwandung auftreten, die zu lokalisieren und abzudichten sind.

In der DE 84 36 583 U1 ist ein Verfahren zum Prüfen der Dichtigkeit von Rohren bekannt, bei dem die Rohrenden mit Stirnscheiben verschlossen werden, und innerhalb des Rohrs ein Unterdruck erzeugt wird, während das Rohr von außen mit Wasser besprüht wird. Zur Erkennung undichter Stellen wird eine Sonde in den aus Rohr und Stirnscheiben gebildeten Behälterinnenraum eingebracht. Diese Sonde umfasst einen auf Helligkeitsstufung empfindlichen optischer Sensor, mit dem eine nasse Stelle, an der sich eine undichte Stelle befindet, von einer trockenen Stelle unterschieden werden kann.

Die DE 196 30 709 A1 beschreibt eine Vorrichtung zur Inspektion und gegebenenfalls zur Sanierung von Rohrabschnitten. Die Dichtigkeitsprüfung erfolgt dabei unter Erzeugung von Überdruck in dem zu prüfenden Rohrabschnitt. Die Vorrichtung umfasst eine Sonde, die in den zu prüfenden Rohrabschnitt eingebracht werden kann. Die Sonde umfasst eine Injektionseinrichtung zur Abgabe von Dichtmitteln sowie eine Inspektionskamera.

Die GB 2 337 114 A beschreibt ein Verfahren zur Leckerkennung in einem Behälter unter Einsatz einer Wärmebildkamera. Das aufgenommene Wärmebild wird fortlaufend auf räumliche Temperaturunterschiede an der Wandoberfläche überwacht, welche einen Hinweis auf ein vorhandenes Leck geben. Die Positionsinformation einer detektierten Temperaturanomalie kann mittels einer Videokamera gewonnen werden, welche gleichzeitig und synchronisiert mit der Wärmebildkamera betrieben wird.

Die US 5,425,279 beschreibt ein Verfahren und ein Gerät zur Überwachung von Behältern hinsichtlich möglicher Deformationen der Behälterwand. Hierzu wird eine Sonde in den Behälter eingebracht, die eine Video-Kamera zur visuellen Überwachung der Behälterinnenseite sowie eine entfernungsmessende optische Sonde zur Erkennung von Deformationen in der Behälterwand umfasst. Aus den Entfernungsdaten der optischen Sonde kann ein Modell der gesamten inneren Oberfläche des Behälters erzeugt werden.

### DARSTELLUNG DER ERFINDUNG

Aufgabe der vorliegenden Erfindung ist es, ein Verfahren sowie eine Vorrichtung zur Prüfung der Dichtigkeit von Behältern anzugeben, welches ohne größeren Aufwand auch bei komplexen Innen- und/oder Außenkonturen des Behälters, wie beispielsweise bei Integraltanks von Flugzeugen, ein schnelles Auffinden eines Lecks ermöglicht. Weiterhin soll ein derartiges Leck schnell und ohne größeren Aufwand abgedichtet werden können.

Diese Aufgabe wird mit dem Verfahren gemäß Anspruch 1 sowie einer Vorrichtung gemäß Anspruch 6 gelöst.

Das erfindungsgemäße Verfahren, bei dem im Behälterinnenraum ein Unterdruck erzeugt und anschließend geprüft wird, ob ein Fluid von außen in den Behälterinnenraum eindringt, ermöglicht es auf einfache Weise, exakt die Eintrittsstelle des in den Behälterinnenraum eintretenden Fluids zu lokalisieren. Diese Umkehrung des an sich bekannten Prinzips, den Behälterinnenraum unter Überdruck zu setzen und zu beobachten, an welcher Stelle Fluid aus dem Behälter austritt, vermeidet die Nachteile dieser bekannten Lösung, nämlich dass aus dem Behälter austretendes Fluid häufig nicht unmittelbar an der Austrittsstelle, sondern davon entfernt sichtbar wird.

Entsprechend der Erfindung werden zur Lokalisierung der Eintrittsstelle eine oder mehrere Sonden in den Behälterinnenraum eingebracht. Diese Sonden können im Behälterinnenraum stationär oder entlang der Behälterinnenwandung bewegbar vorgesehen sein. Erfindungsgemäß umfasst die Sonde zusätzlich eine Kamera, wobei das von der Kamera aufgenommene Bild auf einem Monitor wiedergegeben und mit dem Bild einer virtuellen Darstellung oder einer technischen Zeichnung der Behälterinnenwand überlagert wird, um die Eintrittsstelle in der virtuellen Darstellung oder der technischen Zeichnung zu lokalisieren.

Vorteilhafte Weiterbildungen werden durch die verbleibenden Unteransprüche angegeben.

Zur Abdichtung eines Behälters kann im Anschluss an die Durchführung des Verfahrens zur Prüfung der Dichtigkeit von Behältern, also nach erfolgtem Lokalisieren einer Eintrittsstelle, Dichtmittel mittels einer Sonde von der Behälterinnenseite aus auf die Eintrittsstelle aufgebracht werden. Diese Sonde kann eine von der Kamerasonde eigenständig Sonde sein, sie kann aber auch eine kombinierte Sonde sein, bei der neben der Kamera und gegebenenfalls einem Gas ein geeignetes Reparaturwerkzeug, beispielsweise eine Injektionsspritze oder eine Düse für Dichtmittel, aufweisen.

Die erfindungsgemäße Vorrichtung zur Prüfung der Dichtigkeit von Behältern und zur Reparatur von Lecks erlaubt eine schnelle Reparatur unmittelbar nach Identifikation eines Lecks.

### KURZE BESCHREIBUNG DER ZEICHNUNGEN

Die Erfindung wird nachfolgend anhand eines Beispiels unter Bezugnahme auf die Zeichnung näher erläutert; in dieser zeigt:
- Fig. 1: eine Querschnittzeichnung durch einen Flugzeug-Integraltank,
- Fig. 2: einen Ausschnitt aus einer Querschnittsdarstellung eines Integraltanks mit Fügestellen,
- Fig. 3: die Abdichtung eines Integraltanks an einer Fügestelle und
- Fig. 4: die Inspektion eines Integraltanks mit einer Kamerasonde.

### DARSTELLUNG VON BEVORZUGTEN AUSFÜHRUNGSBEISPIELEN

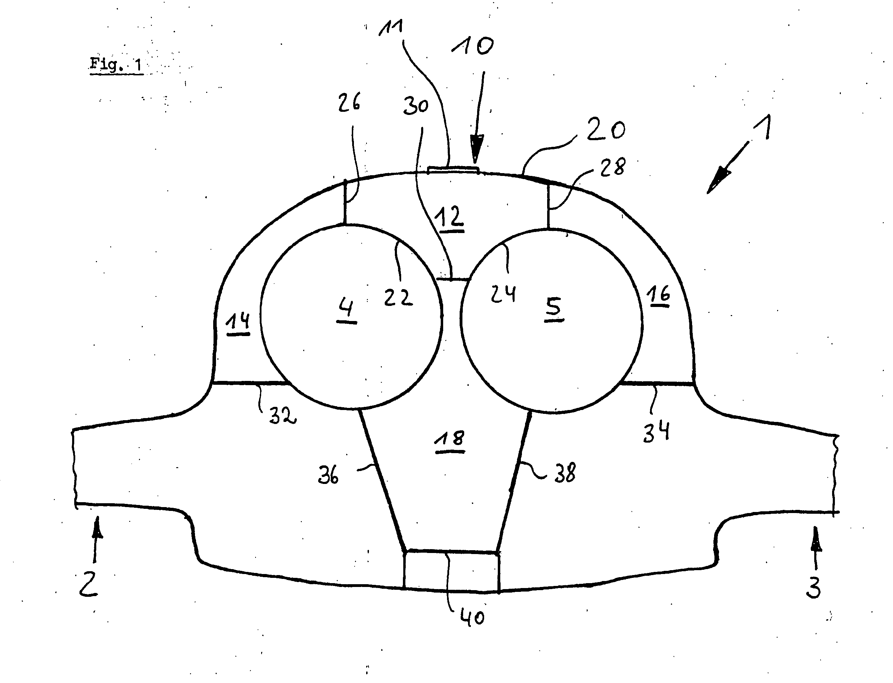

Fig. 1 zeigt schematisch einen Querschnitt durch den Rumpf 1 eines Strahlflugzeugs. Im unteren Bereich des Rumpfs 1 sind seitlich Tragflächen 2, 3 angebracht, von denen nur die Tragflächenwurzein gezeigt sind. Im Inneren des oberen Teils des Rumpfs 1 sind zwei Luftführungskanäle 4, 5 vorgesehen, durch welche Stauluft zu den Triebwerken geführt wird.

Im Inneren des Rumpfs ist ein Integraltank 10 gebildet, der mehrere Kammern aufweist: eine obere Kammer 12, eine linke Kammer 14, eine rechte Kammer 16 und eine untere Kammer 18. Die Kammern können untereinander in Fluidverbindung stehen oder jeweils eigene Betankungsöffnungen aufweisen.

Die obere Kammer 12 des Integraltanks 10 wird begrenzt durch (nicht gezeigte) vordere und hintere Stirnwände, einen Abschnitt der Rumpf-Außenhaut 20; einen Abschnitt der Wandung 22 des linken Luftführungskanals 4, einen Abschnitt der Wandung 24 des rechten Luftführungskanals 5 sowie durch eine linke obere vertikale Schottwand 26, eine rechte obere vertikale Schottwand 28 und eine mittlere horizontale Schottwand 30.

Die linke Kammer 14 des Integraltanks 10 ist begrenzt durch einen Abschnitt der Rumpf-Außenhaut 20, einen Abschnitt der Wandung 22 des linken Luftführungskanals 4, die linke obere vertikale Schottwand 26 sowie eine linke horizontale Schottwand 32 und (nicht gezeigte) vordere und hintere Stirnwände.

Die rechte Kammer 16 des Integraltanks 10 ist begrenzt durch einen Abschnitt der Rumpf-Außenhaut 20, einen Abschnitt der Wandung 24 des rechten Luftführungskanals 5, die rechte obere vertikale Schottwand 28 sowie eine rechte horizontale Schottwand 34 und (nicht gezeigte) vordere und hintere Stirnwände.

Die untere Kammer 18 des Integraltanks 10 ist begrenzt durch die mittlere horizontale Schottwand 30, einen Abschnitt der Wandung 22 des linken Luftführungskanals 4, einen Abschnitt der Wandung 24 des rechten Luftführungskanals 5, eine untere linke Schottwand 36, eine untere rechte Schottwand 38 sowie eine untere horizontale Schottwand 40 und (nicht gezeigte) vordere und hintere Stirnwände.

Das Innere des Integraltanks ist zugänglich über eine von einem Tankdeckel 11 verschließbare Öffnung in der Rumpf-Außenhaut 20.

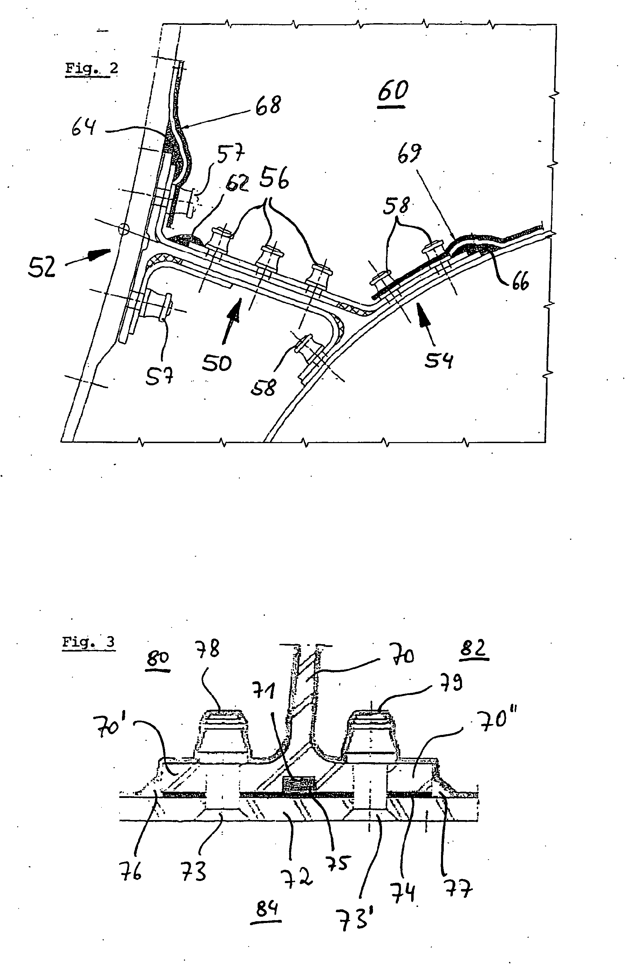

Überall dort, wo die vorgenannten Schottwände oder Stirnwände an die Rumpfaußenhaut 20 und an die jeweilige Wandung 22, 24 der Luftführungskanäle 4, 5 anstoßen, müssen entsprechende Dichtungsmaßnahmen getroffen werden, um den Integraltank 10 zuverlässig abzudichten. Fig. 2 zeigt ein Beispiel einer derartigen Anbringung einer Schottwand 50 an entsprechende Wandungen 52, 54.

Die Schottwand 50 ist aus einer Vielzahl von Profilteilen zusammengesetzt, die über Nieten 56 miteinander vernietet sind. Einige dieser Profilteile sind mittels Nieten 57 mit der linken Wandung 52 vernietet und andere dieser Profilteile sind mittels Nieten 58 mit der rechten Wandung 54 vernietet. Oberhalb der Schottwand 50 und zwischen der linken Wandung 52 und der rechten Wandung 54 ist eine Kammer 60 des Integraltanks ausgebildet. Die einzelnen Profilteile der Schottwand 50 sind gegeneinander mittels einer Raupendichtung 62 auf der zur Kammer 60 gewandten Seite gegeneinander abgedichtet. Im Bereich der Anbindung der Profilteile der Schottwand 50 an die linke Wandung 52 ist auf der Seite der Kammer 60 eine Raupendichtung 64 vorgesehen und analog ist im Bereich der Anbindung der Profilteile der Schottwand 50 an die rechte Wandung 54 ebenfalls eine Raupendichtung 66 auf der Seite der Kammer 60 vorgesehen.

Dort wo die Schottwand 50 an die linke Wandung 52 und an die rechte Wandung 54 anstößt ist auf der Seite der Kammer 60 des Integraltanks zusätzlich eine den Anbindungsbereich übergreifende Spraydichtung 68, 69 vorgesehen.

Der Aufbau einer derartigen Abdichtung einer Schottwand gegenüber einer anderen Wand ist in Fig. 3 dargestellt.

Eine Schottwand 70, die im Querschnitt die Gestalt eines "I" aufweist, stößt mit ihrer unteren Fläche an die Innenfläche einer Wandung 72 an. Der untere Abschnitt der Schottwand 70 besteht aus einem linken waagerechten Schenkel 70' und einem rechten waagerechten Schenkel 70". Zwischen der unteren Fläche des linken waagerechten Schenkels 70' und der unteren Fläche des rechten waagerechten Schenkels 70" der Schottwand 70 sowie der Innenfläche der Wandung 72 ist eine Flächendichtung 74 vorgesehen, die beispielsweise aus Polytetrafluorethylen besteht.

Die Schottwand 70 ist in ihrem unteren Bereich auf der zur Wandung 72 gewandten Seite, dort wo der linke waagerechte Schenkel 70' und der rechte waagerechte Schenkel 70" zusammenstoßen, mit einer Nut 71 versehen. Die Nut 71 ist ebenfalls mit einem Dichtmaterial 75 gefüllt.

Verbunden sind die Schottwand 70 und die Wandung 72 über Niete 73, 73', die jeweils die Wandung 72 und den linken waagerechten Schenkel 70' beziehungsweise den rechten waagerechten Schenkel 70" durchdringen.

An den freien Abschlusskanten des linken waagerechten Schenkels 70' sowie des rechten waagerechten Schenkels 70" sind zwischen dem jeweiligen Schenkel 70' beziehungsweise 70" und der Wandung 72 Raupendichtungen 76, 77 vorgesehen.

Die gesamte vorstehend beschriebene Verbindungsanordnung zwischen der Schottwand 70 und der Wandung 72 ist zusätzlich auf jeder Seite der Schottwand 70 durch einen Dichtungsüberzug 78, 79 abgedichtet, der zumindest einen Teil der Oberfläche der Schottwand 70, den inneren Kopf des jeweiligen Niets 73 beziehungsweise 73', die jeweilige Raupendichtung 76 beziehungsweise 77 und zumindest einen Bereich der Innenwand der Wandung 72 überdeckt.

Auf diese Weise ist eine Abdichtung mit drei Barrieren zwischen der Schottwand 70 und der Wandung 72 geschaffen. Diese Abdichtung der Fügestellen sorgt für eine zuverlässige Dichtigkeit der Innenräume 80, 82 gegenüber der Außenumgebung 84.

Bei der Herstellung wird jede dieser Barrieren während der Montage der Struktur einzeln geprüft, um so Undichtigkeiten bereits im Entstehungsprozess zu entdecken. Dabei wird unterschieden zwischen Trockentests, die unter Verwendung gasförmiger Prüfmedien erfolgen, und Nasstests, die unter Verwendung von Flüssigkeiten, wie zum Beispiel Wasser, Kraftstoff oder Kraftstoffersatzflüssigkeiten, durchgeführt werden. Während herkömmlicherweise diese Tests durch Überdruck im Tankraum bei gleichzeitiger Suche nach Leckagestellen durchgeführt werden, wird beim erfindungsgemäßen Verfahren der Innenraum des Behälters oder Integraltanks 10 unter Unterdruck gegenüber dem in der Umgebung herrschenden Druck versetzt. Dies führt dazu, dass der Leckpfad gegenüber der Vorgehensweise nach dem Stand der Technik nun in umgekehrter Richtung verläuft und somit an der Quelle der Leckage, also am Leckageeintritt endet. Durch diese Vorgehensweise wird ein Leck nicht nur zuverlässig erkannt, sondern kann auch einwandfrei geortet werden.

Bei einfachen Tankgeometrien kann ein transparenter Tankdeckel eingesetzt werden, um den Leckageeintritt durch den transparenten Tankdeckel hindurch zu erkennen. Bei komplexeren Tankgeometrien und insbesondere bei schlechtem Zugang einzelner Kammern eines Tanks oder, wie im Beispiel der Fig. 1, eines Integraltanks, werden bevorzugt steuerbare Kamerasonden durch spezielle hierfür vorgesehene abdichtbare Öffnungen im Tankdeckel in die einzelnen Kammern des Tanks eingeführt.

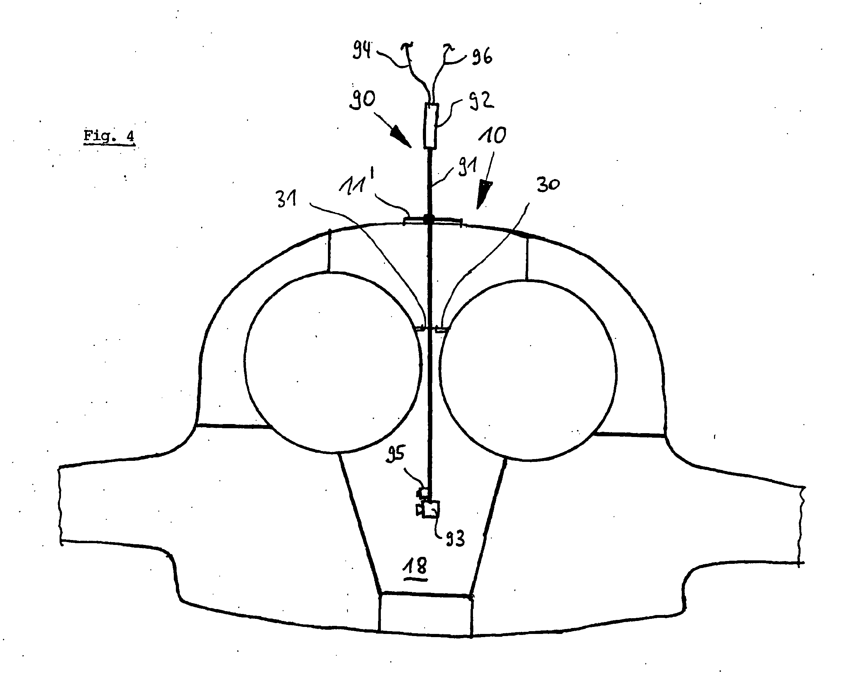

Fig. 4 zeigt ein Beispiel für eine derartige in den Integraltank 10 eingeführte Kamerasonde.

Der Tankdeckel 11 aus Fig. 1 wurde im Beispiel der Fig. 4 durch einen Tankdeckel 11' ersetzt, durch den ein Führungsrohr 91 einer Sonde 90 in den Integraltank 10 schwenkbar und axial verschiebbar eingeführt ist. Das Führungsrohr 91 ist an seinem äußeren Ende mit einer Handhabe 92 versehen, mittels derer das Führungsrohr 91 um den Durchführungspunkt durch den Tankdeckel 11' verschwenkt und diesbezüglich axial verschoben werden kann. Das Führungsrohr 91 ist durch eine Öffnung 31 in der mittleren horizontalen Schottwand 30 hindurch in die untere Kammer 18 des Integraltanks 10 eingeführt. Am unteren Ende des Führungsrohrs 91 ist ein Kamerakopf 93 vorgesehen, der über durch das Führungsrohr 91 nach außen geführte optische oder elektrische Leitungen 94 mit einer Bildwidergabeeinrichtung (nicht gezeigt) verbunden ist.

Zusätzlich zum Kamerakopf 93 ist am unteren Ende des Führungsrohrs 91 auch eine Einrichtung 95 zur Abgabe von Dichtmittel, zum Beispiel eine Sprühdüse, vorgesehen, die über eine ebenfalls durch das Führungsrohr 91 nach außen geführte Leitung 96 mit einer (nicht gezeigten) Zuführleitung für Dichtmittel verbunden ist, aus welcher Dichtmittel durch die Leitung 96 in die Düse 95 gefördert werden kann, um dann aus der Düse 95 unter Druck abgegeben zu werden.

Zusätzlich zum Kamerakopf 93 kann auch ein Gassensor vorgesehen sein, der es ermöglicht, in die zu untersuchende Kammer 18 des Integraltanks 10 von außen eintretendes Gas zu erkennen und die Eintrittsstelle zu orten.

Mit der gezeigten Sonde 90 ist es möglich, den Innenraum eines Behälters, insbesondere des gezeigten Integraltanks 10, dann, wenn der Behälterinnenraum gegenüber der Umgebung unter Unterdruck gesetzt worden ist, auf Leckstellen hin zu untersuchen, diese Leckstellen zu orten und zu identifizieren und mittels der Düse 95 Dichtmittel von innen auf die entsprechenden Leckstellen der Kammer 18 aufzubringen und so das Leck abzudichten. Bei Bedarf kann zusätzlich zum Kamerakopf 93 auch noch eine (nicht gezeigte) Beleuchtung vorgesehen sein. Als Sonde 90 kann beispielsweise ein handelsübliches Boroskop eingesetzt werden.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Rumpf
- 2: linke Tragfläche
- 3: rechte Tragfläche
- 4: linker Luftführungskanal
- 5: rechter Luftführungskanal
- 10: Integraltank
- 11: Tankdeckel
- 11': Tankdeckel
- 12: obere Kammer
- 14: linke Kammer
- 16: rechte Kammer
- 18: untere Kammer
- 20: Rumpf-Außenhaut
- 22: Wandung von 4
- 24: Wandung von 5
- 26: linke obere vertikale Schottwand
- 28: rechte obere vertikale Schottwand
- 30: mittlere horizontale Schottwand
- 32: linke horizontale Schottwand
- 34: rechte horizontale Schottwand
- 36: untere linke Schottwand
- 38: untere rechte Schottwand
- 40: untere horizontale Schottwand
- 50: Schottwand
- 52: linke Wandung
- 54: rechte Wandung
- 56: Nieten
- 57: Nieten
- 58: Nieten
- 60: Kammer des Integraltanks
- 62: Raupendichtung
- 64: Raupendichtung
- 66: Raupendichtung
- 68: Spraydichtung
- 69: Spraydichtung
- 70: Schottwand
- 70': linker waagerechter Schenkel
- 70": rechter waagerechter Schenkel
- 71: Nut
- 72: Wandung
- 73: Niet
- 73': Niet
- 74: Flächendichtung
- 75: Dichtmaterial
- 76: Raupendichtung
- 77: Raupendichtung
- 78: Dichtungsüberzug
- 79: Dichtungsüberzug
- 80: Innenraum
- 82: Innenraum
- 84: Außenumgebung
- 90: Sonde
- 91: Führungsrohr
- 92: Handhabe
- 93: Kamerakopf
- 94: Leitung
- 95: Düse
- 96: Leitung

## Patentansprüche

1. Verfahren zur Prüfung der Dichtigkeit von Behältern mit den Schritten:
- Bereitstellen eines ersten Fluids im Behälterinnenraum, das sich von einem den Behälter umgebenden, zweiten Fluid unterscheidet;
- Erzeugen eines Unterdrucks im Behälterinnenraum;
- Überprüfen der Innenflächen der Behälterwandung auf Spuren von in den Behälterinnenraum eintretendem zweiten Fluid und gegebenenfalls Lokalisieren der Eintrittsstelle(n) wobei
- zur Überprüfung zumindest eine Sonde in den Behälterinnenraum eingebracht wird, wobei
- die Sonde eine Kamera umfasst, **dadurch gekennzeichnet, dass**
- das von der Kamera aufgenommene Bild auf einem Monitor wiedergegeben wird und dass dieses Bild mit dem Bild einer virtuellen Darstellung oder einer technischen Zeichnung der Behälterinnenwand überlagert wird, um die Eintrittsstelle in der virtuellen Darstellung oder der technischen Zeichnung zu lokalisieren.

2. Verfahren nach Anspruch 1, **dadurch gekennzeichnet,**
- **dass** das erste Fluid im Behälterinnenraum flüssig ist,
- **dass** das zweite Fluid gasförmig ist und
- **dass** die Überprüfung auf optische Weise durch Detektion von Gasblasen in der Flüssigkeit erfolgt.

3. Verfahren nach Anspruch 1, **dadurch gekennzeichnet, dass** die Sonde einen Gassensor umfasst, wobei
- das erste Fluid ein erstes Gas oder Gasgemisch ist,
- das zweite Fluid ein vom ersten Gas oder Gasgemisch verschiedenes weiteres Gas oder Gasgemisch ist und
- die Überprüfung durch Detektion des weiteren Gases oder Gasgemisches erfolgt.

4. Verfahren nach einem der vorhergehenden Ansprüche, **dadurch gekennzeichnet, dass** der Behälter ein Tank, vorzugsweise ein Integraltank, eines Fahrzeugs, vorzugsweise eines Luftfahrzeugs oder Raumfahrzeugs, ist.

5. Verfahren zur Prüfung der Dichtigkeit von Behältern gemäß einem der vorhergehenden Ansprüche und zur Abdichtung von Behältern, wobei nach erfolgtem Lokalisieren einer Eintrittsstelle Dichtmittel mittels einer Sonde von der Behälterinnenseite aus auf die Eintrittsstelle aufgebracht wird.

6. Vorrichtung zur Ausführung des Verfahrens zur Prüfung der Dichtigkeit von Behältern nach einem der Ansprüche 1 bis 5, bestehend aus einer in den Behälter (10) einführbaren und von außen steuerbaren Sonde (90), die eine Kamera umfasst, und.
- einen Monitor, auf dem das von der Kamera aufgenommene Bild wiedergegeben werden kann,
**gekennzeichnet durch**
- Mittel, mit denen dieses Bild mit dem Bild einer virtuellen Darstellung oder einer technischen Zeichnung der Behälterinnenwand überlagert werden kann, um die Eintrittsstelle in der virtuellen Darstellung oder der technischen Zeichnung zu lokalisieren.

7. Vorrichtung nach Anspruch 6, **dadurch gekennzeichnet, dass** an der Sonde (90) eine Einrichtung (95) zur Abgabe von Dichtmittel (95) vorgesehen ist, mit der nach erfolgten Lokalisieren einer Eintrittstelle Dichtmittel von der Behälterinnenseite aus auf die Eintrittstelle aufgebracht werden können.

8. Vorrichtung nach Anspruch 7, **dadurch gekennzeichnet, dass** die Einrichtung (95) zur Abgabe von Dichtmittel mittels einer aus dem Behälter (10) herausführbaren Leitung (96) mit Dichtmittel beaufschlagbar ist.

9. Vorrichtung nach einem der Ansprüche 7 oder 8, **dadurch gekennzeichnet, dass** die Einrichtung (95) zur Abgabe von Dichtmittel einen Dichtmittelsprühkopf oder Dichtmittelspritzkopf aufweist.

10. Vorrichtung nach Anspruch 8 oder 9, **dadurch gekennzeichnet, dass** die Einrichtung (95) zur Abgabe von Dichtmittel eine Dichtmittel-Injektionsdüse aufweist.

## Claims

1. Method for testing the sealing of containers, comprising the following steps:
- provision of a first fluid in the container interior, which first fluid differs from a second fluid which surrounds the container;
- production of a reduced pressure in the container interior;
- checking of the inner surfaces of the container wall for traces of a second fluid having entered the container interior and, if appropriate, the location of the entry point or points, wherein
- at least one probe is introduced into the container interior for checking, wherein
- the probe comprises a camera, **characterized in that**
- the image recorded by the camera is reproduced on a monitor, and **in that** this image has superimposed on it the image of a virtual display or a technical drawing of the container internal wall, in order to locate the entry point in the virtual display or the technical drawing.

2. Method according to Claim 1, **characterized**
- **in that** the first fluid in the container interior is liquid,
- **in that** the second fluid is gaseous, and
- **in that** the check is carried out visually by detection of gas bubbles in the liquid.

3. Method according to Claim 1, **characterized in that** the probe comprises a gas sensor, wherein
- the first fluid is a first gas or gas mixture,
- the second fluid is a further gas or gas mixture, which is not the same as the first gas or gas mixture, and
- the check is carried out by detection of the further gas or gas mixture.

4. Method according to one of the preceding claims, **characterized in that** the container is a tank, preferably an integral tank, of a vehicle, preferably of an aircraft or a spacecraft.

5. Method for testing the sealing of containers according to one of the preceding claims and for sealing of containers, wherein, after an entry point has been located, sealant is applied to the entry point by means of a probe from the inside of the container.

6. Apparatus for carrying out the method for testing the sealing of containers according to one of Claims 1 to 5 comprising a probe (90), which can be inserted into the container (10), can be controlled from the outside and comprises a camera and
- a monitor on which the image recorded by the camera can be reproduced,
**characterized by**
- means using which this image can have superimposed on it the image of a virtual display or of a technical drawing of the container internal wall, in order to locate the entry point in the virtual display or the technical drawing.

7. Apparatus according to Claim 6, **characterized in that** a device (95) for emission of sealant is provided on the probe (90), by means of which, after an entry point has been located, sealant can be applied to the entry point from the inside of the container.

8. Apparatus according to Claim 7, **characterized in that** the device (95) for emission of sealant can have sealant supplied to it by means of a line (96) which can be passed out of the container (10).

9. Apparatus according to one of Claims 7 or 8, **characterized in that** the device (95) for emission of sealant has a sealant spray head or a sealant injection head.

10. Apparatus according to Claim 8 or 9,
**characterized in that** the device (95) for emission of sealant has a sealant injection nozzle.

## Revendications

1. Procédé pour tester l'étanchéité de récipients, comprenant les étapes suivantes :
- fournir un premier fluide dans l'espace interne du récipient, qui se distingue d'un deuxième fluide entourant le récipient ;
- produire une dépression dans l'espace interne du récipient ;
- vérifier les surfaces internes de la paroi du récipient pour déceler des traces du deuxième fluide ayant pénétré à l'intérieur de l'espace interne du récipient et éventuellement pour localiser le ou les points d'entrée,
- pour la vérification, au moins une sonde étant introduire dans l'espace interne du récipient,
- la sonde comprenant une caméra,
**caractérisé en ce que**
- l'image enregistrée par la caméra est reproduite sur un moniteur et **en ce que** cette image est superposée à l'image d'une représentation virtuelle ou d'un dessin technique de la paroi interne du récipient, afin de localiser le point d'entrée dans la représentation virtuelle ou le dessin technique.

2. Procédé selon la revendication 1, **caractérisé en ce que**
- le premier fluide dans l'espace interne du récipient est liquide,
- le deuxième fluide est gazeux et
- la vérification s'effectue de manière optique par détection de bulles de gaz dans le liquide.

3. Procédé selon la revendication 1, **caractérisé en ce que** la sonde comprend un détecteur de gaz,
- le premier fluide étant un premier gaz ou un mélange de gaz,
- le deuxième fluide étant un autre gaz ou mélange de gaz différent du premier gaz ou mélange de gaz, et
- la vérification s'effectuant par détection de l'autre gaz ou mélange de gaz.

4. Procédé selon l'une quelconque des revendications précédentes, **caractérisé en ce que** le récipient est un réservoir, de préférence un réservoir intégral, d'un véhicule, de préférence d'un avion ou d'un vaisseau spatial.

5. Procédé pour tester l'étanchéité de récipients selon l'une quelconque des revendications précédentes et pour réaliser l'étanchéité de récipients, dans lequel, après que l'on a localisé un point d'entrée, un agent d'étanchéité est appliqué sur le point d'entrée au moyen d'une sonde depuis le côté interne du récipient.

6. Dispositif pour mettre en oeuvre le procédé pour tester l'étanchéité de récipients selon l'une quelconque des revendications 1 à 5, constitué d'une sonde (90) pouvant être introduite dans le récipient (10) et commandable depuis l'extérieur, qui comprend une caméra, et
- un moniteur, sur lequel l'image enregistrée par la caméra peut être reproduite,
**caractérisé par**
- des moyens avec lesquels cette image peut être superposée à l'image d'une représentation virtuelle ou d'un dessin technique de la paroi interne du récipient, afin de localiser le point d'entrée dans la représentation virtuelle ou le dessin technique.

7. Dispositif selon la revendication 6, **caractérisé en ce que** l'on prévoit sur la sonde (90) un dispositif (95) pour distribuer un agent d'étanchéité (95), avec lequel, une fois que l'on a localisé un point d'entrée, un agent d'étanchéité peut être appliqué sur le point d'entrée depuis le côté interne du récipient.

8. Dispositif selon la revendication 7, **caractérisé en ce que** le dispositif (95) peut être sollicité avec de l'agent d'étanchéité pour distribuer l'agent d'étanchéité au moyen d'une conduite (96) pouvant être guidée hors du récipient (10).

9. Dispositif selon l'une quelconque des revendications 7 ou 8, **caractérisé en ce que** le dispositif (95) pour distribuer de l'agent d'étanchéité présente une tête de pulvérisation ou d'atomisation d'agent d'étanchéité.

10. Dispositif selon la revendication 8 ou 9,
**caractérisé en ce que** le dispositif (95) pour distribuer de l'agent d'étanchéité présente une buse d'injection d'agent d'étanchéité.
